# DEMANDE DE BREVET EUROPEEN

(11) **EP 2 966 316 A1**
(43) Date de publication de la demande: **13.01.2016**
(21) Numéro de dépôt: 15164110.7
(22) Date de dépôt: 17.04.2015
(51) Int. Cl.: F16F 15/14

(54) **DISPOSITIF D'AMORTISSEMENT D'OSCILLATIONS DE TORSION**

(30) Priorité: 16.05.2014 FR 1454392
(71) Demandeur: Valeo Embrayages, 80009 Amiens Cedex 2 (FR)
(72) Inventeur: Marechal, Olivier, 80000 Amiens (FR); Dael, Dominique, 76870 Gaillefontaine (FR)
(74) Mandataire: Cardon, Nicolas

(57) **Abrégé**

Dispositif (1) d'amortissement d'oscillations de torsion pour disque de friction, comprenant :
-un support (2) apte à se déplacer en rotation autour d'un axe (X) et,
-au moins un corps pendulaire (3) mobile par rapport au support,

le corps pendulaire (3) comprenant au moins une partie s'étendant radialement vers l'extérieur au-delà de la partie la plus radialement extérieure du support (2).

## Description

La présente invention concerne un dispositif d'amortissement d'oscillations de torsion, notamment pour un système de transmission de véhicule automobile.

Dans une telle application, le dispositif d'amortissement peut être intégré à un système d'amortissement de torsion d'un embrayage apte à relier sélectivement le moteur thermique à la boîte de vitesses, afin de filtrer les vibrations dues aux acyclismes du moteur.

En variante, dans une telle application, le dispositif d'amortissement peut être intégré à un disque de friction de l'embrayage, ce disque de friction étant alors monté dans un véhicule automobile.

On connait de la demande FR 2 307 190 un dispositif d'amortissement de vibrations dans un rotor d'hélicoptère.

On connait par ailleurs de la demande WO 2013/156733 un dispositif d'amortissement d'oscillations de torsion avec un support présentant des pattes qui sont en permanence radialement au-delà des corps pendulaires.

On connaît encore de la demande DE 10 2011 012 276 un dispositif d'amortissement d'oscillations de torsion comprenant un support mobile autour d'un axe de rotation et une paire de masses pendulaires montées sur ce support avec une possibilité de déplacement limité par rapport à ce dernier grâce à des rouleaux coopérant d'une part avec des pistes de roulement ménagées dans le support, et d'autre part avec des pistes de roulement ménagées dans les masses pendulaires. Le rayon extérieur, mesuré depuis l'axe de rotation du support, des masses pendulaires est sensiblement égal au rayon extérieur du support. Le support présente ainsi des dimensions importantes et donc un moment d'inertie important. Or, le filtrage des oscillations de torsion apporté par le dispositif n'est pas lié au moment d'inertie du support, de sorte que le moment d'inertie du support peut être qualifié d'« inutile ». Ce moment d'inertie du support alourdit le dispositif d'amortissement, et donc le système de transmission lorsqu'implanté dans ce dernier, sans que cet alourdissement n'apporte de gain en termes de filtrage. Cet alourdissement du dispositif d'amortissement dégrade par ailleurs le passage des vitesses et accélère l'usure du synchroniseur de la boîte de vitesses, de sorte que ce dernier doit être conçu de manière à être plus robuste, entraînant ainsi un surcoût.

Il existe un besoin pour bénéficier d'un dispositif d'amortissement d'oscillations de torsion, notamment pour système de transmission de véhicule automobile, qui permette de remédier à l'inconvénient précité.

L'invention vise à répondre à ce besoin et elle y parvient, selon l'un de ses aspects, à l'aide d'un dispositif d'amortissement d'oscillations de torsion pour disque de friction, comprenant :
- un support apte à se déplacer en rotation autour d'un axe et,
- au moins un corps pendulaire mobile par rapport au support,
le corps pendulaire comprenant au moins une partie s'étendant radialement vers l'extérieur au-delà de la partie la plus radialement extérieure du support.

Selon l'invention, la distance entre ladite partie du corps pendulaire et l'axe de rotation du support est supérieure à la distance maximale entre le bord radialement extérieur du support et l'axe de rotation du support. Le bord radialement extérieur du support ne s'étend pas nécessairement à une distance constante de l'axe de rotation, cette distance pouvant varier de manière continue ou non lorsque l'on se déplace autour de l'axe de rotation du support.

Ce positionnement du corps pendulaire par rapport au support permet d'augmenter la part du moment d'inertie provenant du corps pendulaire dans le moment d'inertie du dispositif d'amortissement. Le support peut présenter une dimension radiale réduite, et donc un moment d'inertie réduit.

Le corps pendulaire peut en permanence comprendre une partie s'étendant radialement vers l'extérieur au-delà de la partie la plus radialement extérieure du support. En variante, le corps pendulaire comprend une partie s'étendant radialement vers l'extérieur au-delà de la partie la plus radialement extérieure du support au moins lorsque le dispositif est au repos, c'est-à-dire lorsque le dispositif ne filtre pas d'oscillations de torsion liées aux acyclismes du moteur thermique.

Le dispositif peut comprendre une pluralité de corps pendulaires se succédant angulairement autour de l'axe.

Le rapport entre le moment d'inertie total des corps pendulaires et le moment d'inertie du dispositif d'amortissement peut être supérieur à 75%, étant notamment supérieur à 80%, mieux à 85%.

Comme mentionné ci-dessus, les corps pendulaires et le support peuvent ainsi être choisis l'un par rapport à l'autre de manière à augmenter la proportion en moment d'inertie dans le dispositif des corps pendulaires par rapport au support. On réduit ainsi la proportion du moment d'inertie « inutile » dans le dispositif tout en augmentant la proportion du moment d'inertie « utile ».

Le support et les corps pendulaires peuvent être tels qu'au moins 75% du moment d'inertie du dispositif soit apporté par ladite partie des corps pendulaires s'étendant radialement vers l'extérieur au-delà de la partie la plus radialement extérieure du support.

Une valeur de rapport selon l'invention entre moment d'inertie total des corps pendulaires et moment d'inertie du dispositif peut être obtenue :
- en agissant uniquement sur le support pour réduire son moment d'inertie, de manière à faire diminuer le moment d'inertie total du dispositif, ou
- en agissant à la fois sur le support et sur les corps pendulaires, par exemple sans modifier le moment d'inertie total du dispositif.

Au sens de la présente demande, « axialement » signifie « parallèlement à l'axe de rotation du support », « radialement » signifie « le long d'un axe appartenant à un plan perpendiculaire à l'axe de rotation du support et coupant cet axe de rotation », et « angulairement » ou « circonférentiellement » signifie « autour de l'axe de rotation du support ».

Toujours au sens de la présente demande, « solidaire » signifie « rigidement couplé ».

Dans un exemple de mise en oeuvre de l'invention, chaque corps pendulaire peut comprendre :
- au moins une entretoise coopérant avec au moins un organe de roulement coopérant par ailleurs avec le support pour guider le déplacement du corps pendulaire par rapport au support,
- une masse pendulaire, et
- au moins un bras de liaison solidaire d'une part de l'entretoise et d'autre part de la masse pendulaire, et dont au moins une portion est interposée radialement entre l'entretoise et la masse pendulaire.

La présence du ou des bras de liaison qui s'étend(ent) radialement permet de conserver une position radialement extérieure pour la masse pendulaire, même lorsque la dimension radiale du support est réduite. Les organes de roulement sont déportés radialement vers l'intérieur par rapport aux dispositifs d'amortissement de type pendulaire de l'art antérieur.

Le ou les bras de liaison peuvent être des plaques de dimension axiale réduite, de sorte que ces bras de liaison présentent un moment d'inertie peu important.

Chaque corps pendulaire peut comprendre différentes pièces, étant par exemple formé par une ou plusieurs entretoises, un ou plusieurs bras de liaison, et une masse pendulaire. Ces différentes pièces sont avantageusement distinctes et elles sont alors rigidement couplées entre elles, de sorte que le corps pendulaire ne présente aucun degré de liberté interne, formant ainsi un même ensemble solidaire.

Un organe de liaison tel qu'un rivet solidarise par exemple le bras de liaison à la masse pendulaire.

La ou les entretoises est par exemple disposée radialement intérieurement par rapport au support, c'est-à-dire qu'elle(s) s'étend(ent) à l'intérieur de l'espace délimité radialement extérieurement par le bord radialement extérieur du support.

Chaque entretoise peut coopérer avec un seul organe de roulement, ce dernier coopérant par ailleurs avec le support. En variante, chaque entretoise coopère avec deux organes de roulement, ces organes de roulement étant par exemple décalés angulairement et coopérant par ailleurs chacun avec le support.

La masse pendulaire est par exemple disposée radialement extérieurement par rapport au support, c'est-à-dire qu'elle s'étend à l'extérieur de l'espace délimité radialement extérieurement par le bord radialement extérieur du support.

Le ou les bras de liaison peuvent s'étendre de part et d'autre du bord radialement extérieur du support.

Dans un plan orthogonal à l'axe de rotation du support, le bras de liaison peut s'étendre angulairement entre deux bords d'extrémité rectilignes divergeant l'un de l'autre lorsque l'on s'éloigne de l'axe de rotation du support.

Le moment d'inertie de la masse pendulaire peut être supérieur à celui de l'entretoise et à celui du bras de liaison. La masse pendulaire, l'entretoise et le ou les bras de liaison peuvent être réalisés dans le même matériau, par exemple l'acier.

Le cas échéant, le support peut également être réalisé dans ce même matériau, notamment l'acier.

Lorsqu'au moins 75% du moment d'inertie du dispositif est apporté par la partie des corps pendulaires s'étendant radialement vers l'extérieur au-delà de la partie la plus radialement extérieure du support, cette partie peut, pour chaque corps pendulaire, être formée par la masse pendulaire seulement, ou par la masse pendulaire et la fraction radialement extérieure, c'est-à-dire la fraction radialement au-delà du bord radialement extérieur du support, du ou des bras de liaison.

La masse pendulaire et le support peuvent être disposés de manière à ce que l'espace axial dans lequel s'étend la masse pendulaire et à ce que l'espace axial dans lequel s'étend le support se recoupent au moins partiellement. Ces espaces axiaux peuvent notamment être identiques. En variante, l'espace axial dans lequel s'étend la masse pendulaire peut être supérieur à l'espace axial dans lequel s'étend le support. Le ou les bras de liaison peuvent s'étendre dans des espaces axiaux différents de la partie se recoupant des espaces axiaux de la masse pendulaire et du support.

L'entretoise, la masse pendulaire et le bras de liaison peuvent s'étendre sur une même valeur de secteur angulaire, mesurée depuis l'axe de rotation. Autrement dit, lorsqu'observé selon l'axe de rotation du support, l'angle formé entre les bords d'extrémité entre lesquels s'étend angulairement l'entretoise peut être égal à l'angle formé entre les bords d'extrémité entre lesquels s'étend angulairement la masse pendulaire et à l'angle formé entre les bords d'extrémité entre lesquels s'étend angulairement le bras de liaison.

Chaque corps pendulaire peut comprendre deux bras de liaison, l'un des bras de liaison étant disposé axialement en regard d'un premier côté du support et l'autre bras de liaison étant disposé axialement en regard d'un deuxième côté du support, opposé au premier côté.

Les bras de liaison d'un même corps pendulaire peuvent être solidarisés entre eux au niveau de leur portion radialement intérieure et/ou au niveau de leur portion radialement extérieure. La solidarisation au niveau radialement intérieur est par exemple effectuée à l'aide de l'entretoise et la solidarisation au niveau radialement extérieur est par exemple effectuée via des organes de liaison, tels que des rivets, servant par ailleurs à solidariser chaque bras de liaison à la masse pendulaire.

Chaque bras de liaison peut être réalisé d'une seule pièce ou via deux, ou plus, pièces rigidement couplées entre elles, l'une de ces pièces étant par exemple fixée à l'entretoise et l'autre de ces pièces étant par exemple solidarisée à la masse pendulaire, recevant par exemple l'organe de liaison permettant cette solidarisation avec la masse pendulaire.

Selon un exemple particulier de mise en oeuvre de l'invention, chaque corps pendulaire comprend :
- une entretoise coopérant avec deux organes de roulement, chaque organe de roulement coopérant en outre avec le support,
- deux bras de liaison, chaque bras de liaison étant solidaire d'une part de l'entretoise et d'autre part de la masse pendulaire et, chaque bras de liaison ayant au moins une portion interposée radialement entre l'entretoise et la masse pendulaire.

Les bras de liaison peuvent entre eux délimiter l'espace axial dans lequel s'étendent l'entretoise et la masse pendulaire, ainsi le cas échéant que le support.

Chaque bras de liaison présente par exemple une dimension axiale comprise entre 0,5 et 1,5 mm, voire entre 0,5 et 2 mm. Le support et/ou la masse pendulaire présentent par exemple une dimension axiale comprise entre 2 mm et 5 mm.

Le dispositif peut comprendre au moins une pièce d'interposition dont au moins une partie est axialement disposée entre le support et un bras. Une telle pièce d'interposition peut ainsi limiter le déplacement axial des corps pendulaires par rapport au support, évitant ainsi les chocs axiaux entre lesdites pièces, et ainsi une usure et des bruits non souhaités, notamment lorsque le support et/ou les bras de liaison sont en métal. Plusieurs pièces d'interposition, par exemple sous forme de patins, peuvent être prévues. Les pièces d'interposition sont notamment réalisées en un matériau amortissant, tel que du plastique ou du caoutchouc.

Les pièces d'interposition sont par exemple portées par les corps pendulaires, chaque bras de liaison d'un corps pendulaire portant par exemple des pièces d'interposition. Les pièces d'interposition peuvent être positionnées sur le bras de liaison de manière à ce qu'il y ait toujours au moins une pièce d'interposition dont au moins une partie est axialement interposée entre ledit bras et le support, quelles que soient les positions relatives du support et dudit bras lors du déplacement par rapport au support du corps pendulaire.

Dans tout ce qui précède, chaque entretoise peut être reçue dans une fenêtre ménagée dans le support, chaque fenêtre étant par exemple dédiée à une entretoise.

Le support comprend par exemple plusieurs branches se succédant angulairement, chaque branche présentant un bord radialement intérieur délimitant radialement extérieurement une fenêtre et un bord radialement extérieur formant localement le bord radialement extérieur du support.

Chaque corps pendulaire peut comprendre au moins un organe d'amortissement de butée interposé radialement entre la masse pendulaire et le support, et disposé de manière à venir au contact du support dans des positions relatives de la masse pendulaire et du support. Un tel contact n'existe pas lorsque le dispositif est au repos, c'est-à-dire lorsque le dispositif ne filtre pas d'oscillations de torsion liées aux acyclismes du moteur.

L'organe d'amortissement de butée peut être disposé en regard du bord radialement intérieur de la masse pendulaire, et venir au contact du bord radialement extérieur du support. L'organe d'amortissement comprend par exemple deux tiges de maintien espacées angulairement, et une pièce de jonction, notamment solidaire des tiges de maintien, s'étendant entre les deux tiges et apte à venir au contact du support lorsque l'organe d'amortissement de butée est au contact de ce dernier.

Dans un plan orthogonal à l'axe de rotation du support, la pièce de jonction peut présenter au moins une portion incurvée. La pièce de jonction peut présenter dans ce plan une forme de bande.

Les tiges et la pièce de jonction peuvent être réalisées d'une seule pièce ou non.

Lorsque les tiges et la pièce de jonction sont des pièces distinctes, seule la pièce de jonction ou seules les tiges de maintien peuvent présenter les propriétés élastiques permettant l'amortissement des chocs liés auxdites positions relatives de la masse et du support. La pièce de jonction est par exemple en élastomère ou en caoutchouc.

Chaque tige de maintien s'étend par exemple axialement entre deux extrémités axiales, chaque extrémité axiale étant reçue dans un logement ménagé dans un des bras de liaison. L'organe d'amortissement de butée peut ainsi être maintenu, non en étant porté par la masse pendulaire, mais par les deux bras de liaison entre lesquels il est axialement disposé.

Chaque corps pendulaire peut comprendre plusieurs tels organes d'amortissement de butée, par exemple entre deux et quatre, et ces derniers peuvent se succéder angulairement.

Chaque organe de butée interposé radialement entre la masse pendulaire et le support vient ainsi en contact avec le support pour certaines positions relatives de la masse pendulaire et du support.

L'entretoise et le support peuvent avoir des formes telles qu'un bord d'extrémité de l'entretoise puisse venir au contact d'un bord latéral de la fenêtre recevant ladite entretoise pour d'autres positions relatives de la masse pendulaire et du support, notamment lorsque le corps pendulaire est en butée contre le support. Le bord latéral relie le bord radialement intérieur de la fenêtre au bord radialement extérieur de la fenêtre.

Depuis une position au repos de la masse pendulaire, cette dernière peut, lorsque le corps pendulaire se déplace par rapport au support du fait d' oscillations de torsion vues par le dispositif, occuper d'abord des positions relatives par rapport au support dans lesquelles l'organe d'amortissement de butée interposé radialement entre la masse pendulaire et le support vient au contact du support, puis des positions relatives dans lesquelles l'entretoise et le support viennent directement en contact via les surfaces mentionnées ci-dessus, de manière à assurer une butée franche pour le corps pendulaire dans son déplacement par rapport au support et protéger ainsi lesdits organes d'amortissement de butée contre des forces de compression trop importantes qui pourraient les user, voire les détruire.

Chaque corps pendulaire peut comprendre au moins un organe d'amortissement de butée interposé radialement entre l'entretoise et le support, et disposé de manière à venir au contact du support dans des positions relatives de l'entretoise et du support. Un tel contact n'existe pas lorsque le dispositif est au repos.

Cet organe d'amortissement de butée peut être disposé en regard du bord radialement intérieur de l'entretoise et venir au contact du bord radialement intérieur de la fenêtre ménagée dans le support et recevant l'entretoise. Chaque corps pendulaire peut comprendre deux tels organes d'amortissement de butée.

Similairement à ce qui a été exposé en ce qui concerne l'organe d'amortissement de butée interposé radialement entre la masse pendulaire et le support, l'organe d'amortissement de butée interposé radialement entre l'entretoise et le support peut comprendre deux tiges de maintien et une pièce de jonction.

Dans tout ce qui précède, chaque organe de roulement peut coopérer avec une piste de roulement définie par le support. Il s'agit par exemple d'une portion du bord délimitant radialement extérieurement chaque fenêtre. Ce bord peut présenter, lorsqu'observé dans un plan orthogonal à l'axe de rotation, des portions concaves et des portions convexes, le cas échéant en alternance. Le support peut ou non être réalisé d'une seule pièce.

Dans tout ce qui précède également, chaque organe de roulement peut coopérer avec une piste de roulement définie par l'entretoise. Chaque entretoise présente par exemple un contour radialement extérieur définissant deux pistes de roulement se succédant angulairement dans un plan orthogonal à l'axe de rotation. Ce contour peut ou non, le cas échéant, porter un revêtement définissant lui-même la piste de roulement. Les pistes de roulement définies par l'entretoise peuvent comprendre une portion concave, dans un plan orthogonal à l'axe de rotation du support.

Chaque organe de roulement est par exemple un rouleau de section circulaire dans un plan orthogonal à l'axe de rotation du support. Les extrémités axiales du rouleau peuvent être dépourvues de rebord annulaire fin. Chaque rouleau peut être réalisé en acier.

Chaque rouleau peut être uniquement sollicité en compression entre les pistes de roulement mentionnées ci-dessus.

Les pistes de roulement définies par l'entretoise et par le support peuvent être superposées axialement, c'est-à-dire s'étendre dans de mêmes plans perpendiculaires à l'axe de rotation.

Dans tout ce qui précède, chaque entretoise peut être solidarisée au(x) bras de liaison par exemple par soudure, frettage, rivetage ou vissage.

Dans tout ce qui précède, chaque masse pendulaire peut être solidarisée au(x) bras de liaison par exemple par soudure, frettage, rivetage ou vissage.

Chaque entretoise peut comprendre deux ou trois barres, chaque barre s'étendant axialement et comprenant :
- une première région rigidement couplée à un des bras de liaison du corps pendulaire,
- une deuxième région rigidement couplée à l'autre bras de liaison du corps pendulaire, et
- une région intermédiaire reçue dans la fenêtre ménagée dans le support

La première région et la deuxième région peuvent former des extrémités opposées de ladite barre. Les barres peuvent être sensiblement identiques.

Chaque entretoise peut comprendre une poutre de liaison s'étendant perpendiculairement aux barres et étant rigidement couplée à la région intermédiaire de chacune desdites barres.

En variante, la poutre de liaison qui s'étend perpendiculairement aux barres peut être réalisée d'une seule pièce avec ces dernières. La poutre de liaison peut être une seule et même pièce, ou bien deux pièces, voire plus, rigidement couplées entre elles.

Lorsque chaque entretoise comprend des barres et une poutre de liaison telles que définies ci-dessus, chaque piste de roulement définie par l'entretoise peut être formée par une partie du contour radialement extérieur de la poutre de liaison.

Dans tout ce qui précède, la forme des pistes de roulement peut être telle que les corps pendulaires soient uniquement déplacés par rapport au support en translation autour d'un axe fictif parallèle à l'axe de rotation du support.

En variante, la forme des pistes de roulement peut être telle que les corps pendulaires soient déplacés par rapport au support à la fois :
- en translation autour d'un axe fictif parallèle à l'axe de rotation du support et,
- également en rotation autour du centre de gravité dudit corps pendulaire, un tel mouvement étant encore appelé « mouvement combiné » et divulgué par exemple dans la demande DE 10 2011 086 532.

Dans tout ce qui précède, le dispositif peut comprendre trois corps de roulement se succédant angulairement. Ces corps de roulement sont par exemple répartis de façon uniforme sur le pourtour de l'axe de rotation du support.

Dans tout ce qui précède,
- le moment d'inertie total d'un corps de roulement peut être la somme des moment d'inertie des éléments suivants : entretoise(s), bras de liaison, masse pendulaire, pièce(s) d'interposition, organe(s) d'amortissement de butée interposé(s) radialement entre l'entretoise et le support, organe(s) d'amortissement de butée interposé(s) radialement entre la masse pendulaire et le support, organe(s) de liaison solidarisant ensemble masse pendulaire et bras de liaison,
- le moment d'inertie du dispositif peut être la somme du moment d'inertie total des corps de roulement, du support, et des organes de roulement.

Dans un autre exemple de mise en oeuvre de l'invention, chaque corps pendulaire comprend :
- au moins une entretoise,
- une masse pendulaire, et
- au moins un bras de liaison solidaire d'une part de l'entretoise et d'autre part de la masse pendulaire et dont au moins une portion est disposée radialement intérieurement par rapport à la masse pendulaire, le bras de liaison coopérant avec au moins un organe de roulement coopérant par ailleurs avec le support pour guider le déplacement du corps pendulaire par rapport au support.

Similairement à ce qui a été mentionné précédemment, chaque corps pendulaire peut former un même ensemble solidaire.

La ou les entretoises est par exemple disposée radialement intérieurement par rapport au support, c'est-à-dire qu'elle(s) s'étend(ent) à l'intérieur de l'espace délimité radialement extérieurement par le bord radialement extérieur du support.

Chaque bras de liaison peut coopérer avec un seul organe de roulement, ce dernier coopérant par ailleurs avec le support. En variante, chaque bras de liaison coopère avec deux organes de roulement, ces organes de roulement étant par exemple décalés angulairement et coopérant par ailleurs chacun avec le support.

Selon cet autre exemple de mise en oeuvre de l'invention, chaque organe de roulement peut coopérer d'une part avec des pistes de roulement définies par le support et d'autre part avec des pistes de roulement définies par un bras de liaison. Les pistes de roulement définies par le support sont alors décalées axialement par rapport aux pistes de roulement définies par chaque bras de liaison. Les entretoises peuvent, selon cet autre exemple de mise en oeuvre de l'invention, avoir pour seule fonction de solidariser entre eux les bras de liaison, étant par exemple des rivets.

Selon encore un autre exemple de mise en oeuvre de l'invention, chaque corps pendulaire comprend deux masses pendulaires disposées axialement en regard de côtés opposés du support. Une première masse pendulaire est par exemple disposée en regard d'un premier côté du support et une deuxième masse pendulaire est disposée en regard d'un deuxième côté du support, axialement opposé au premier. Les pistes de roulement peuvent alors être ménagées directement dans chaque masse pendulaire, ces pistes de roulement étant alors axialement décalées par rapport à celles définies par le support.

Selon cet encore autre exemple de mise en oeuvre de l'invention, peuvent se succéder axialement : la première masse pendulaire, le support et la deuxième masse pendulaire. Chaque corps pendulaire peut être dépourvu de bras radial et chaque corps pendulaire peut comprendre des entretoises solidarisant ensemble la première et la deuxième masse pendulaire mais ne coopérant pas avec les organes de roulement. Les entretoises sont par exemple des rivets.

En variante ou en combinaison de tout ce qui précède, le support peut présenter, dans un plan orthogonal à l'axe de rotation, une portion coeur et des portions en pétale faisant saillie radialement vers l'extérieur depuis la portion coeur, ces dernières se succédant angulairement.

Le support comprend par exemple quatre portions en pétales séparées entre elles par des zones vides.

Les portions en pétale peuvent être inscrites dans un cercle.

Chaque portion en pétale peut délimiter au moins une fenêtre dont un bord définit une piste de roulement pour l'organe de roulement, ce dernier coopérant par ailleurs avec une piste de roulement définie par le corps pendulaire, définie par exemple par l'entretoise, par le bras de liaison ou par une masse pendulaire, comme mentionné précédemment.

Le bord radialement extérieur d'un tel support peut être formé :
- par le bord radialement extérieur d'une portion en pétale, angulairement au niveau de ladite portion, et
- par le bord radialement extérieur de la portion coeur, angulairement entre deux portions en pétale consécutives.

Le bord radialement extérieur de la portion coeur est par exemple circulaire dans un plan orthogonal à l'axe de rotation du support.

Le rapport entre le rayon du cercle dans lequel sont inscrites les portions en pétale et le rayon du bord radialement extérieur de la portion coeur est par exemple de l'ordre de 2, étant notamment compris entre 1,5 et 3.

Un tel support ne s'étend alors radialement extérieurement à la portion coeur que partiellement, uniquement au niveau des portions en pétale servant au guidage des corps pendulaires, de sorte que l'on réduit le moment d'inertie inutile du support.

L'invention a encore pour objet, selon un autre de ses aspects, un disque de friction pour système de transmission d'un véhicule automobile comprenant un dispositif d'amortissement tel que défini ci-dessus.

Pour un tel disque de friction, l'invention permet de réduire la proportion du moment d'inertie du support dans le moment d'inertie vu depuis l'arbre d'entrée de la boîte de vitesses.

Le support du dispositif d'amortissement peut être l'un parmi :
- un voile du disque de friction,
- une rondelle de guidage du disque de friction,
- une rondelle de phasage du disque de friction, ou
- un support distinct dudit voile, de ladite rondelle de guidage et de ladite rondelle de phasage.

L'invention pourra être mieux comprise à la lecture de la description qui va suivre d'un exemple non limitatif de mise en oeuvre de celle-ci et à l'examen du dessin annexé sur lequel :
- la figure 1 représente de façon schématique un dispositif selon un exemple de mise en oeuvre de l'invention, lorsqu'il est au repos,
- la figure 2 représente en détail un corps pendulaire du dispositif de la figure 1, avec un des bras de liaison non représenté,
- la figure 3 est une vue similaire à la figure 2 lorsque le corps pendulaire vient en butée contre le support, et
- la figure 4 représente de façon isolée un autre exemple de support, pouvant être associé aux corps pendulaires du dispositif des figures 1 à 3.

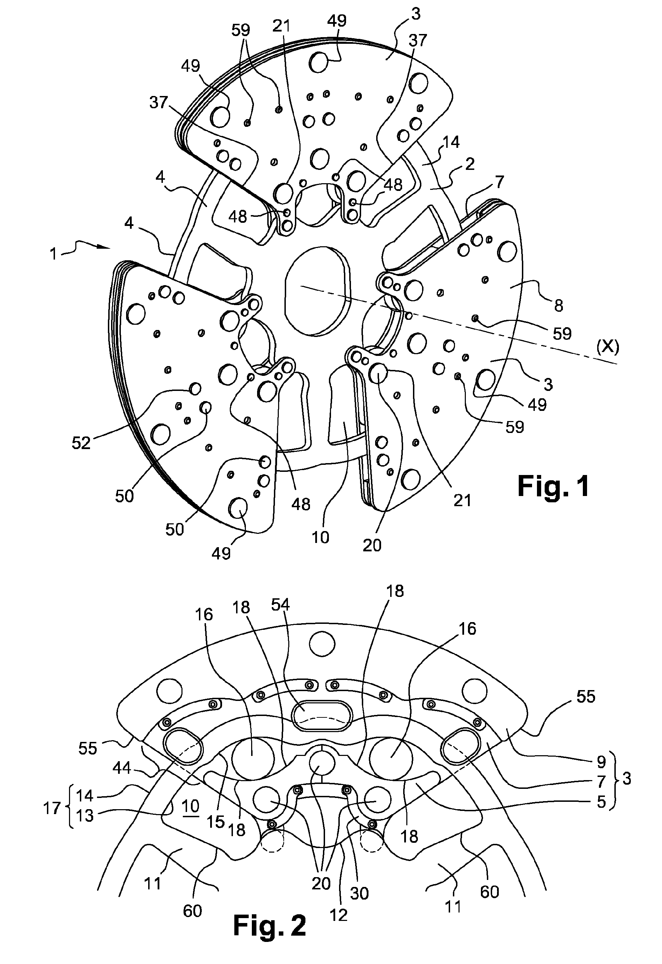

On a représenté sur la figure 1 un dispositif d'amortissement 1 selon un exemple de mise en oeuvre de l'invention. Le dispositif d'amortissement 1 est de type oscillateur pendulaire. Le dispositif 1 est notamment apte à équiper un système de transmission de véhicule automobile, étant par exemple intégré à un disque de friction non représenté d'un tel système de transmission.

Ce disque de friction peut faire partie d'une chaîne de propulsion d'un véhicule automobile, cette dernière comprenant un moteur thermique notamment à trois ou quatre cylindres. Sur la figure 1, le dispositif 1 est au repos, c'est-à-dire qu'il ne filtre pas les oscillations de torsion transmises par la chaîne de propulsion du fait des acyclismes du moteur thermique.

De manière connue, un tel disque de friction peut comprendre un amortisseur de torsion présentant au moins un élément d'entrée, au moins un élément de sortie, et des organes élastiques à action circonférentielle qui sont interposés entre lesdits éléments d'entrée et de sortie. Au sens de la présente demande, les termes « entrée » et « sortie » sont définis par rapport au sens de transmission du couple depuis le moteur thermique du véhicule vers les roues de ce dernier.

Le dispositif 1 comprend dans l'exemple considéré:
- un support 2 apte à se déplacer en rotation autour d'un axe X, et
- une pluralité de corps pendulaires 3 mobiles par rapport au support 2.

Dans l'exemple considéré, trois corps pendulaires 3 sont prévus, étant répartis de façon uniforme sur le pourtour de l'axe X.

Le support 2 du dispositif d'amortissement 1 peut être constitué par :
- un élément d'entrée de l'amortisseur de torsion,
- un élément de sortie ou un élément de phasage intermédiaire disposé entre deux séries de ressort de l'amortisseur, ou
- un élément lié en rotation à un des éléments précités et distinct de ces derniers, étant alors par exemple un support propre au dispositif 1.

Le support 2 est notamment une rondelle de guidage ou une rondelle de phasage.

Dans l'exemple considéré, le support 2 présente globalement une forme d'anneau comportant deux côtés opposés 4 qui sont ici des faces planes.

Chaque corps pendulaire 3 comprend dans l'exemple considéré :
- une entretoise 5,
- deux bras de liaison 7 et 8, et
- une masse pendulaire 9.

L'entretoise 5, les bras de liaison 7 et 8, et la masse pendulaire 9 forment dans l'exemple décrit un même ensemble solidaire, ces éléments étant rigidement couplés entre eux.

Chaque corps pendulaire 3 est dans l'exemple considéré associé à une fenêtre unique 10 ménagée dans le support 2, ladite fenêtre 10 étant associée à un seul corps pendulaire.

Chaque fenêtre 10 est délimitée :
- angulairement par deux montants 11 du support 2,
- radialement intérieurement par un bord radialement intérieur 12, et
- radialement extérieurement par un bord radialement extérieur 13. Ce dernier appartient à une branche 17 s'étendant angulairement au niveau de la fenêtre 10 entre deux bords d'extrémité 13 et 14, le bord d'extrémité 13 étant le bord radialement extérieur de la fenêtre 10 déjà mentionné et le bord d'extrémité 14 étant le bord radialement extérieur du support 2.

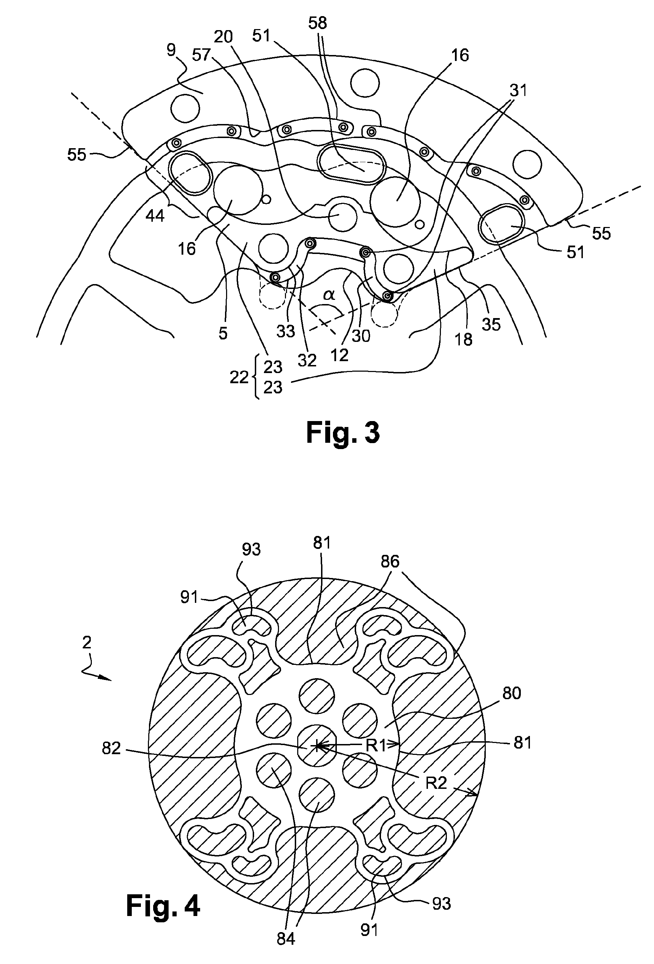

Comme on le verra par la suite, le bord d'extrémité 13 définit localement des pistes de roulement 15, chaque piste de roulement 15 coopérant avec un organe de roulement 16 pour guider le déplacement du corps pendulaire 3 par rapport au support 2. Dans l'exemple considéré, chaque piste de roulement 15 comprend, dans le plan des figures 2 et 3, des portions concaves et des portions convexes.

Comme on peut le voir sur la figure 2, sur laquelle le bras de liaison 8 n'est pas représenté pour des raisons de clarté, l'entretoise 5 est disposée radialement intérieurement par rapport au reste du corps pendulaire 3, et elle définit des pistes de roulement 18 coopérant également avec un organe de roulement 16.

Chaque entretoise 5 peut comprendre trois barres 20 sensiblement identiques et s'étendant toutes trois parallèlement à l'axe X, étant angulairement décalées. Chaque extrémité axiale d'une barre 20 est dans l'exemple considéré solidarisée à l'un des bras de liaison 7 ou 8. Chaque extrémité d'une barre 20 est par exemple reçue dans un trou traversant 21 ménagé dans un des bras de liaison 7 ou 8, et un rivetage ou un frettage desdites extrémités peut ensuite avoir lieu pour permettre la solidarisation de l'entretoise 5 aux bras de liaison 7 et 8. L'entretoise 5 est alors en grande partie disposée axialement entre les bras de liaison 7 et 8 et elle détermine l'écartement axial entre lesdits bras de liaison 7 et 8.

L'entretoise 5 comprend encore dans l'exemple considéré une poutre de liaison 22 s'étendant perpendiculairement à l'axe X. La poutre de liaison 22 est ici rigidement couplée à trois barres 20 au niveau de régions intermédiaires de ces dernières, disposées entre les extrémités axiales. La poutre de liaison 22 est ici formée par deux morceaux 23 rigidement couplés entre eux au niveau d'une des barres 20 disposée angulairement entre les deux autres barres 20.

Comme on le verra par la suite, dans l'exemple considéré :
- le contour radialement extérieur d'un morceau 23 d'une poutre de liaison 22 définit une piste de roulement 18, et
- le contour radialement extérieur de l'autre morceau 23 de la poutre de liaison 22 définit une autre piste de roulement 18.

Chaque entretoise 5 peut être une pièce monobloc obtenue par frappe. En variante, chaque entretoise 5 est réalisée en au moins plusieurs pièces.

Chaque organe de roulement 16 est mobile par rapport au support 2 et aux corps pendulaires 3. Dans l'exemple considéré, chaque organe de roulement 16 est formé par un rouleau. Chaque rouleau présente dans le plan de la figure 2 une section circulaire. Chaque rouleau peut être plein mais, en variante, il pourrait s'agir d'une pièce creuse, par exemple de forme tubulaire. Chaque rouleau est ici est dépourvu de rebord annulaire ménagé à chacune de ses extrémités axiales et s'étendant perpendiculairement à l'axe X.

Chaque organe de roulement 16 coopère dans l'exemple considéré avec des pistes de roulement 15 et 18 mentionnées précédemment. Plus précisément, chaque organe de roulement 16 coopère au niveau radialement intérieur avec la piste de roulement 18 et au niveau radialement extérieur avec la piste de roulement 15 lors de son déplacement par rapport au support 2 et au corps pendulaire 3, étant par exemple uniquement sollicité en compression entre les pistes de roulement 15 et 18.

Comme représenté sur la figure 2, chaque entretoise 5 est associée à deux organes d'amortissement de butée 30 pour le déplacement de ladite entretoise 5 par rapport au support 2. Chaque organe d'amortissement de butée 30 est ici interposé radialement entre l'entretoise 5 et le support 2, et vient en contact du bord radialement intérieur 12 de la fenêtre 10 ménagée dans le support 2 pour certaines positions de l'entretoise 5 par rapport au support 2. Pour une même entretoise 5, les organes d'amortissement de butée 30 se succèdent par exemple angulairement. Un de ces organes d'amortissement de butée 30 est par exemple associé à l'un des morceaux 23 de la poutre de liaison 22 tandis que l'autre organe d'amortissement de butée 30 est associé à l'autre morceau de la poutre de liaison 22. Chaque organe d'amortissement de butée 30 est ici disposé en regard du bord radialement intérieur 33 du morceau 23 correspondant de la poutre de liaison 22.

Dans l'exemple considéré, chaque organe d'amortissement de butée 30 comprend :
- deux tiges de maintien 31 espacées angulairement, et
- une pièce de jonction 32 s'étendant entre les deux tiges de maintien 31 et apte à venir au contact du support 2 pour lesdites positions relatives de l'entretoise 5 et du support 2.

Les tiges de maintien 31 et la pièce de jonction 32 peuvent être réalisées d'une seule pièce ou non. Lorsque les tiges de maintien 31 et la pièce de jonction 32 sont des pièces distinctes, seule la pièce de jonction 32 peut présenter des propriétés élastiques permettant l'amortissement des chocs liés aux positions relatives de l'entretoise 5 et du support 2. La pièce de jonction 32 est par exemple en élastomère ou en caoutchouc, ayant dans le plan de la figure une forme de bande.

On va maintenant décrire en référence aux figures 1 à 3 les bras de liaison 7 et 8. Comme on peut le voir, les bras de liaison 7 et 8 s'étendent sensiblement parallèlement l'un par rapport à l'autre, étant dans des plans orthogonaux à l'axe de rotation X. L'un des bras de liaison 7 s'étend ici en regard d'un côté 4 du support tandis que l'autre bras de liaison 8 s'étend en regard de l'autre côté du support 2. Les bras de liaison 7 et 8 sont dans l'exemple décrit exactement superposables, étant formés par des pièces identiques.

Chaque bras de liaison 7 ou 8 s'étend angulairement entre deux bords d'extrémité 37 divergeant l'un de l'autre lorsque l'on s'éloigne de l'axe de rotation X, et la valeur du secteur angulaire α défini entre ces bords d'extrémité 37, mesurée depuis l'axe de rotation X, est dans l'exemple considéré égale à la valeur, mesurée depuis l'axe X, du secteur angulaire défini entre les bords d'extrémité 35 entre lesquels s'étend angulairement l'entretoise 5.

Les bras de liaison 7 et 8 délimitent entre eux un espace axial dans lequel sont reçus dans l'exemple considéré le support 2, l'entretoise 5 et la masse pendulaire 9.

Comme on peut le voir sur les figures 2 et 3, chaque bras de liaison 7 ou 8 comprend dans l'exemple considéré une portion 44 radialement interposée entre l'entretoise 5 et la masse pendulaire 9, cette portion 44 s'étendant :
- en partie radialement en deça du bord radialement extérieur 14 du support 2, et
- en partie radialement au-delà dudit bord radialement extérieur 14.

Chaque bras de liaison 7 ou 8 peut comprendre des trous. Certains trous peuvent ainsi correspondre aux trous traversants 21 recevant les extrémités axiales des barres 20 pour assurer la solidarisation des bras de liaison 7 ou 8 et de l'entretoise 5.

Certains trous peuvent être des trous 48 recevant les extrémités axiales des tiges de maintien 31, de manière à maintenir axialement les organes d'amortissement de butée 30.

D'autres trous 49 peuvent recevoir des rivets ou tout autre moyen de fixation permettant de solidariser la masse pendulaire 9 aux bras 7 et 8, comme mentionné ci-après.

D'autres trous 50, traversants ou non, peuvent permettre la fixation de pièces d'interposition 51. Ces dernières sont dans l'exemple considéré disposées axialement entre un bras de liaison 7 ou 8 et le support 2, étant distinctes et des bras de liaison 7 ou 8 et du support 2.

Le nombre de pièces d'interposition 51 peut varier, chaque corps pendulaire 3 comprenant ici trois pièces d'interposition 51 disposées axialement entre une branche 17 du support 2 et un des bras de liaison 7 ou 8.

Chaque pièce d'interposition 51 peut comprendre :
- un ou plusieurs tétons 52 destinés à être montés dans un des trous 50 pour assurer la fixation de la pièce d'interposition 51 sur le bras de liaison 7 ou 8, et
- une partie d'interposition 54 disposée entre le support 2 et ledit bras de liaison 7 ou 8.

Dans l'exemple des figures 1 à 3, chaque pièce d'interposition 51 se présente sous la forme d'un patin, étant notamment réalisée en plastique, mais l'invention n'est pas limitée à ce choix de matériau.

Chaque bras de liaison 7 ou 8 peut présenter une dimension axiale inférieure à celle du support 2, par exemple inférieure à la moitié de la dimension axiale du support 2. La dimension axiale de chaque bras de liaison 7 ou 8 est de préférence comprise entre 1/4 et 1/3 de celle du support 2.

La masse pendulaire 9 s'étend dans l'exemple considéré radialement extérieurement par rapport à l'entretoise 5, étant décalée radialement par rapport à cette dernière grâce aux bras de liaison 7 et 8. Elle s'étend angulairement entre deux bords d'extrémité 55 définissant entre eux un secteur angulaire mesuré depuis l'axe de rotation X du support 2. Dans l'exemple illustré, la valeur de ce secteur angulaire, mesurée depuis l'axe X, est égale à la valeur α du secteur angulaire des bras 7 et 8 mentionnée précédemment. La masse pendulaire 9 s'étend ici axialement entre les portions radialement extérieures des bras de liaison 7 et 8, étant par exemple solidarisée à ces portions au moyen de rivets reçus dans les trous 49.

L'espace axial dans lequel s'étend la masse pendulaire 9 est ici supérieur à l'espace axial dans lequel s'étend le support 2. La masse pendulaire 9 présente ici une dimension axiale supérieure à celle des bras de liaison 7 et 8.

Le bord radialement intérieur 57 de la masse pendulaire 9 est ici disposé en regard d'organes d'amortissement de butée 58 radialement interposés entre ladite masse pendulaire 9 et le bord radialement extérieur 14 du support 2. Quatre organes d'amortissement de butée 58 se succédant angulairement peuvent ainsi être associés à une même masse pendulaire 9.

Chaque organe d'amortissement de butée 58 peut être structurellement similaire aux organes d'amortissement de butée 30 décrits en référence à l'entretoise 5, et des trous 59 ménagés dans les bras de liaison 7 et 8 peuvent alors recevoir les extrémités axiales des tiges de liaison des organes d'amortissement de butée 58, de manière à assurer leur maintien axial, comme mentionné précédemment.

Comme représenté sur la figure 3, lorsque le corps pendulaire 3 est en butée à l'issue de son déplacement par rapport au support 2, cette butée n'est pas assurée via l'organe d'amortissement de butée 58, mais par un contact direct entre un bord d'extrémité 35 de l'entretoise 5 et un bord latéral 60 de la fenêtre 10.

La masse pendulaire 9 présente ici une dimension axiale supérieure à celle des bras de liaison 7 et 8, la dimension axiale de la masse pendulaire 9 étant par exemple égale à celle du support 2.

Dans l'exemple considéré, la masse pendulaire 9 et une fraction des bras de liaison 7 et 8 sont disposés radialement extérieurement par rapport au bord radialement extérieur 14 du support 2. Le moment d'inertie apporté par la partie des corps pendulaires 3 s'étendant radialement vers l'extérieur au-delà de la partie radialement la plus extérieure du support 2 est par exemple égal à au moins 75% du moment d'inertie total du dispositif 1.

La figure 4 représente de façon isolée un support 2 différent de celui représenté sur les figures 1 à 3 mais pouvant être utilisé à la place de ce dernier pour former avec les corps pendulaires 3 des figures 1 à 3 un dispositif d'amortissement 1 selon un autre exemple de mise en oeuvre de l'invention.

Le support 2 de la figure 4 interagit par exemple avec deux corps pendulaires, mais un autre nombre de corps pendulaires est possible, par exemple trois.

Le support 2 de la figure 4 occupe une surface inférieure à celle du support selon les figures 1 à 3. Comme représenté, ce support 2 présente une portion coeur 80 présentant un bord radialement extérieur 81 sensiblement circulaire de rayon R1. Cette portion coeur 80 présente une ouverture 82 recevant un arbre non représenté du système de transmission et située sensiblement au centre de ladite portion coeur 80. La portion coeur 80 présente en outre une pluralité d'autres ouvertures 84 permettant de réduire le moment d'inertie du support 2.

Le support 2 présente en outre une pluralité de portions en pétale 86 faisant radialement saillie extérieurement au-delà du bord radialement extérieur 81 de la portion coeur 80. Dans l'exemple considéré, quatre portions en pétale 86 se succèdent angulairement. Ces portions en pétale 86 sont inscrites dans un cercle de rayon R2. R2 est par exemple égal au double de R1.

Chaque portion en pétale 86 définit plusieurs ouvertures de taille différentes. Parmi ces ouvertures, l'une d'entre elles est une ouverture 91 dont un bord 93 définit une piste de roulement coopérant avec un organe de roulement en vue de guider le déplacement d'un corps pendulaire 3.

D'autres ouvertures sont dans l'exemple considéré formées dans les portions en pétale 86. Lorsque chaque corps pendulaire comprend deux parties disposées chacune axialement en regard d'un bord du support, ces autres ouvertures ménagées dans les portions en pétale 86 peuvent recevoir des rivets reliant entre elles ces deux parties. Ces rivets peuvent, le cas échéant, porter des organes de butée pour le déplacement des parties du corps pendulaire par rapport au support 2. Ces organes de butée peuvent alors venir en butée contre les bords de ces autres ouvertures des portions en pétale 86.

L'invention n'est pas limitée aux exemples qui viennent d'être décrits.

Par exemple, les pistes de roulement coopérant avec l'organe de roulement et formées dans un corps pendulaire 3 peuvent, en variante de ce qui a été décrit en référence aux figures 1 à 3, être définies par les bras de liaison 7 et 8 ou directement par la masse pendulaire 9 qui peut alors être double.

## Revendications

1. Dispositif (1) d'amortissement d'oscillations de torsion pour disque de friction, comprenant :
- un support (2) apte à se déplacer en rotation autour d'un axe (X) et,
- au moins un corps pendulaire (3) mobile par rapport au support,
le corps pendulaire (3) comprenant au moins une partie s'étendant radialement vers l'extérieur au-delà de la partie la plus radialement extérieure du support (2).

2. Dispositif selon la revendication 1, le corps pendulaire (3) comprenant :
- une entretoise (5) coopérant avec au moins un organe de roulement (16) coopérant par ailleurs avec le support (2) pour guider le déplacement du corps pendulaire (3) par rapport au support (2),
- une masse pendulaire (9), et
- au moins un bras de liaison (7, 8) solidaire d'une part de l'entretoise (5) et d'autre part de la masse pendulaire (9), et dont au moins une portion (44) est interposée radialement entre l'entretoise (5) et la masse pendulaire (9).

3. Dispositif selon la revendication 2, la masse pendulaire (9) et le support (2) étant disposés de manière à ce que l'espace axial dans lequel s'étend la masse pendulaire (9) et l'espace axial dans lequel s'étend le support (2) se recoupent au moins partiellement.

4. Dispositif selon la revendication 2 ou 3, l'entretoise (5), la masse pendulaire (9) et le bras de liaison (7, 8) s'étendant sur un secteur angulaire (α) de même valeur mesurée depuis l'axe de rotation (X).

5. Dispositif selon l'une quelconque des revendications 2 à 4, chaque corps pendulaire (3) comprenant deux bras de liaison (7, 8), un premier bras (7) étant disposé axialement en regard d'un premier côté (4) du support (2) et un deuxième bras (8) étant disposé axialement en regard d'un deuxième côté (4) du support (2), opposé au premier côté.

6. Dispositif selon l'une quelconque des revendications 2 à 5, comprenant au moins une pièce d'interposition (51) dont au moins une partie (54) est axialement disposée entre le support (2) et un bras de liaison (7, 8).

7. Dispositif selon l'une quelconque des revendications 2 à 6, le corps pendulaire (3) comprenant au moins un organe d'amortissement de butée (58) interposé radialement entre la masse pendulaire (9) et le support (2) et disposé de manière à venir au contact du support (2) dans des positions relatives de la masse pendulaire (9) et du support (2).

8. Dispositif selon la revendication 7, l'organe d'amortissement de butée (58) étant disposé radialement en regard du bord radialement intérieur (57) de la masse pendulaire (9) et venant au contact du bord radialement extérieur (14) du support (2).

9. Dispositif selon la revendication 7 ou 8, l'entretoise (5) et le support (2) ayant des formes telles qu'un bord d'extrémité (35) de l'entretoise puisse venir au contact d'un bord latéral (60) d'une fenêtre (10) du support (2) recevant ladite entretoise (5) dans d'autres positions relatives de la masse pendulaire (9) et du support (2).

10. Dispositif selon l'une quelconque des revendications 2 à 9, le corps pendulaire (3) comprenant au moins un organe d'amortissement de butée (30) radialement interposé entre le support (2) et l'entretoise (5), et disposé de manière à venir au contact du support (2) dans des positions relatives de l'entretoise (5) et du support (2).

11. Dispositif selon la revendication 10, ledit organe d'amortissement de butée (30) étant disposé en regard du bord radialement intérieur (33) de l'entretoise (5) et venant au contact du bord radialement intérieur (12) d'une fenêtre (10) du support (2) recevant ladite entretoise (5).

12. Dispositif selon l'une quelconque des revendications précédentes, comprenant une pluralité de corps pendulaires (3) mobiles par rapport au support (2) et se succédant angulairement autour de l'axe (X).

13. Dispositif selon la revendication 12, le rapport entre le moment d'inertie total des corps pendulaires (3) et le moment d'inertie du dispositif d'amortissement (1) étant supérieur à 75%.

14. Dispositif selon la revendications 12 ou 13, le support (2) et les corps pendulaires (3) étant tels qu'au moins 75% du moment d'inertie du dispositif soit apporté par la partie des corps pendulaires (3) s'étendant radialement vers l'extérieur au-delà de la partie la plus radialement extérieure du support (2)..

15. Disque de friction pour système de transmission d'un véhicule automobile, comprenant un dispositif d'amortissement (1) selon l'une quelconque des revendications 1 à 14, le support (2) du dispositif étant notamment l'un parmi :
- un voile du disque de friction,
- une rondelle de guidage du disque de friction,
- une rondelle de phasage du disque de friction, ou
- un support distinct dudit voile, de ladite rondelle de guidage et de ladite rondelle de phasage.
